# EUROPEAN PATENT APPLICATION

(11) **EP 2 613 529 A2**
(43) Date of publication of application: **10.07.2013**
(21) Application number: 12177519.1
(22) Date of filing: 23.07.2012
(51) Int. Cl.: H04N 7/18

(54) **Monitoring system including an array of cameras for eye movement recording**

(30) Priority: 21.07.2011 US 510249 P
(71) Applicant: Weinblatt, Lee S., Teaneck, New Jersey 07666 (US)
(72) Inventor: Weinblatt, Lee S., Teaneck, New Jersey 07666 (US)
(74) Representative: Epping - Hermann - Fischer

(57) **Abstract**

A system and a method for monitoring eye movement of a person viewing a scene composed of discrete areas. A plurality of video cameras are arranged so that a field of view of each of the plurality of video cameras corresponds to a respectively different one of the discrete areas of the scene. Each of the plurality of video cameras records a person within its respective field of view, and the video feed output from each of the plurality of cameras is processed to determine which of the discrete areas of the scene the recorded person is viewing.

## Description

### FIELD OF THE INVENTION

The present invention is related to a technique for eye movement recording. In particular, example embodiments include an array of cameras and a method thereof for recording the eye movement of a viewer.

### BACKGROUND OF THE INVENTION

Many purchases made by consumers are impulse driven. For example, over half of the purchases made at the supermarket are considered impulse purchases.

Whether a consumer is able to see a package and recognize the package as packaging for a particular product are important questions for manufacturers. Manufactures are also concerned with how often a consumer looks at the package and for how long the consumer looks at the package. Manufacturers thus need real-world data of consumers interacting with product packaging so that they can more accurately predict consumer behavior in stores.

Monitoring a consumer while they are viewing television or reading a magazine is relatively easy. Monitoring a consumer's interaction with product packaging is more difficult.

Manufacturers have conventionally presented prototype package designs to consumers in a focus group setting. However, this method has poor predictive validity for the consumer's behavior in a real-world environment. It is difficult to simulate the real-world environment of a store in a testing or monitoring situation. Other conventional monitoring that uses images of simulated shelving showing prototype packaging likewise cannot measure a consumer's true interaction or engagement with the packaging. Consumers that wear conventional portable eye movement recorders in stores to measure their interaction with product packaging also do not exhibit true shopping behavior.

### SUMMARY OF THE INVENTION

It is an objective of the present invention to more truly measure a shopper's or consumer's interaction or engagement with product packaging in a natural state.

According to one aspect of the invention, an array of cameras for recording eye movement of a viewer comprises a plurality of bars comprising a plurality of cameras and a scene camera. The plurality of bars is attached to shelves containing packaging or other items. A field of view of each of the plurality of cameras corresponds to an area of a scene to be monitored. Each of the plurality of cameras record a time-stamped video feed of their respective field of view. The scene camera records a time-stamped video of a field of view of the scene to be monitored. The time-stamped video feed from each of the plurality of cameras is filtered through the one or more facial recognition programs. The filtered time-stamped video feeds from the plurality of cameras are matched by time-stamp with the video feed from the scene camera to overlap the video feed of the overall scene with the video feed from the camera of the plurality of cameras that the viewer is looking at in order to determine which area of the scene the viewer is viewing at a particular time. That is, the results of the facial recognition filtering of the video feeds from the plurality of cameras are processed with the matched video feed from the scene camera to determine whether the viewer, e.g., a consumer or shopper, is looking at a particular area of the scene that corresponds to one of the particular cameras and, thus, at particular product packaging. The results may be further processed to determine if the consumer recognized the area as containing packaging for a particular product, how often a consumer looked at a particular area or packaging and for how long the consumer looked at the particular area or packaging.

According to another aspect of the invention, a method for recording eye movement of a view using an array of cameras comprises providing a scene camera and plurality of bars comprising a plurality of cameras. The plurality of bars is attached to shelves containing packaging or other items. A field of view of each of the plurality of cameras corresponds to an area of a scene to be monitored. Each of the plurality of cameras record a time-stamped video feed of their respective field of view. The scene camera records a time-stamped video of a field of view of the scene to be monitored. The time-stamped video feed from each of the plurality of cameras is filtered through the one or more facial recognition programs. The filtered time-stamped video feeds from the plurality of cameras are matched by time-stamp with the video feed from the scene camera to overlap the video feed of the overall scene with the video feed from the camera of the plurality of cameras that the viewer is looking at in order to determine which area the viewer is viewing at a particular time. That is, the results of the facial recognition filtering of the video feeds from the plurality of cameras are processed with the matched video feed from the scene camera to determine whether the viewer, e.g., a consumer or shopper, is looking at a particular area of the scene that corresponds to one of the particular cameras and, thus, at particular product packaging. The results may be further processed to determine if the consumer recognized the area as containing packaging for a particular product, how often a consumer looked at a particular area or packaging and for how long the consumer looked at the particular area or packaging.

### BRIEF DESCRIPTION OF THE DRAWINGS

The above and/or other aspects and advantages will become more apparent and more readily appreciated from the following detailed description of embodiments of the invention taken in conjunction with the accompanying drawings of which:

Fig. 1 is a schematic block diagram showing an array cameras according to an example embodiment;

Fig. 2 shows an example scene covered by an array of cameras according to an example embodiment;

Fig. 3 shows an example scene camera located opposite, e.g., across the aisle from, the example scene shown in Fig. 2;

Fig. 4 shows an example scene divided into a distributed array of areas by an array of cameras according to an example embodiment; and

Fig. 5 is a flow chart showing a method for recording eye movement of a viewer using an array of cameras according to an example embodiment, and Fig. 6 is a schematic diagram showing a system for implementing the method.

### DETAILED DESCRIPTION OF THE DRAWINGS

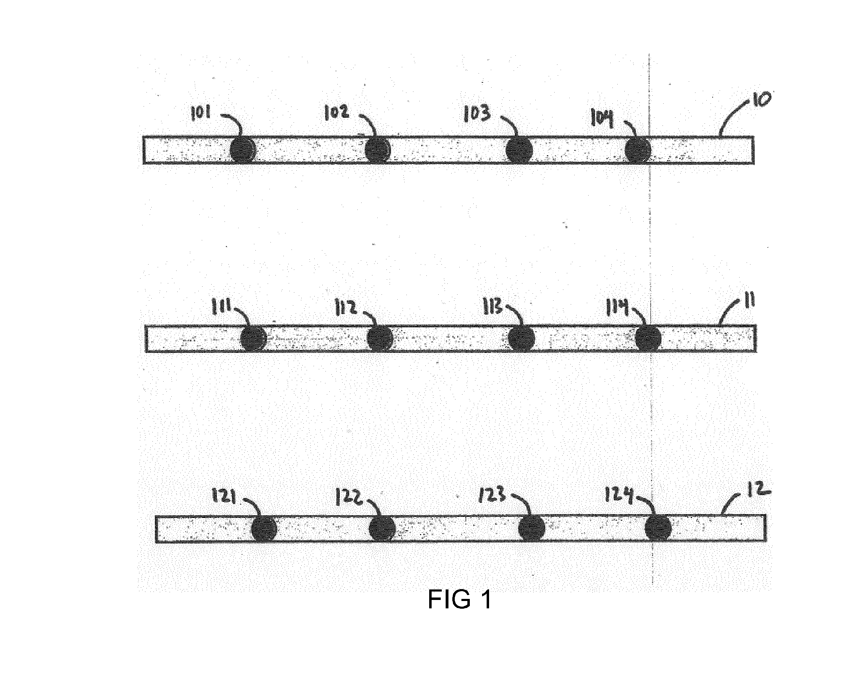

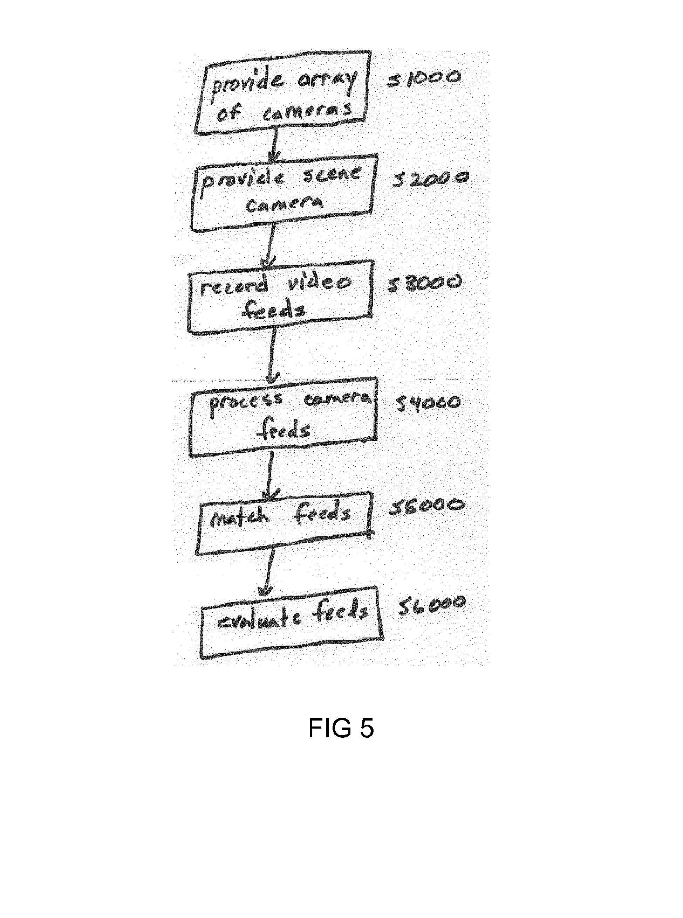

As shown in Fig. 1, an array of cameras for eye movement recording is used according to an example embodiment. The cameras are fixed to store shelves on which products are displayed for easy access by shoppers. The cameras are positioned in an array, such as in equidistant rows and columns. The cameras can be fixed individually to the shelves, or several cameras are fixed to some type of support and then that support is fixed to the shelves. The example embodiment utilizes bars as such supports. In particular, Fig. 1 shows a plurality of bars 10, 11, 12. Fig. 1 shows first through third bars 10, 11, 12; however, example embodiments are not limited thereto and the array of cameras may comprise as few as one bar or as many bars as needed or required to cover a scene to be monitored. The bars 10, 11, 12 may be clip-on bars comprising clips for harmless and unobtrusive attachment and detachment to shelves in a supermarket or store or, alternatively, the bars 10, 11, 12 maybe comprise an adhesive backing, screws or other means for securing the bars to shelving or an in-store display. The bars 10, 11, 12 are thus provided on shelves or other structures to create an array of cameras for eye movement recording (S1000 in Fig. 5).

Each of the bars 10, 11, 12 has one or more shopper monitoring cameras 101-104, 111-114, 121-124 attached thereto. That is, the first clip-on bar 10 mounts cameras 101, 102, 103, 104, the second clip-on bar 11 mounts cameras 111, 112, 113, 114 and the third clip on bar mounts cameras 121, 122, 123, 124. Fig. 1 shows each bar 10, 11, 12 mounts four cameras. However, example embodiments are not limited thereto and each bar may have as few as one camera or as many cameras as needed or required to cover an area for monitoring. The cameras 101-104, 111-114, 121-124 may be miniature or micro-cameras so that they are relatively unobtrusive and unrecognizable on the bars. Accordingly, a shopper or consumer viewing a shelving system containing products and packaging will be relatively unaware of the presence of the cameras.

The cameras 101-104, 111-114, 121-124 are configured to record the faces of passing shoppers looking at the shelves which have the bars 10, 11, 12 mounted thereon. The cameras 101-104, 111-114, 121-12 are equally spaced apart from each other on their respective bars 10, 11, 12. For example, camera 101 is the same distance from camera 102 as camera 103 is from camera 102, and camera 101 is the same distance from camera 111 as camera 121 is from camera 111. Each of the cameras 101-104, 111-114, 121-124 on the bars 11, 12, 13 is adjustable in the horizontal or vertical direction and can be zoomed in or out. The cameras may be manually adjusted or adjusted remotely by a controller at a central monitoring computer (not shown). Each of the cameras 101-104, 111-114, 121-124 are adjusted to cover a particular field of view so that they can be used to determine if a shopper is looking at a corresponding area of the scene on the shelves that comprises part of the scene to be monitored.

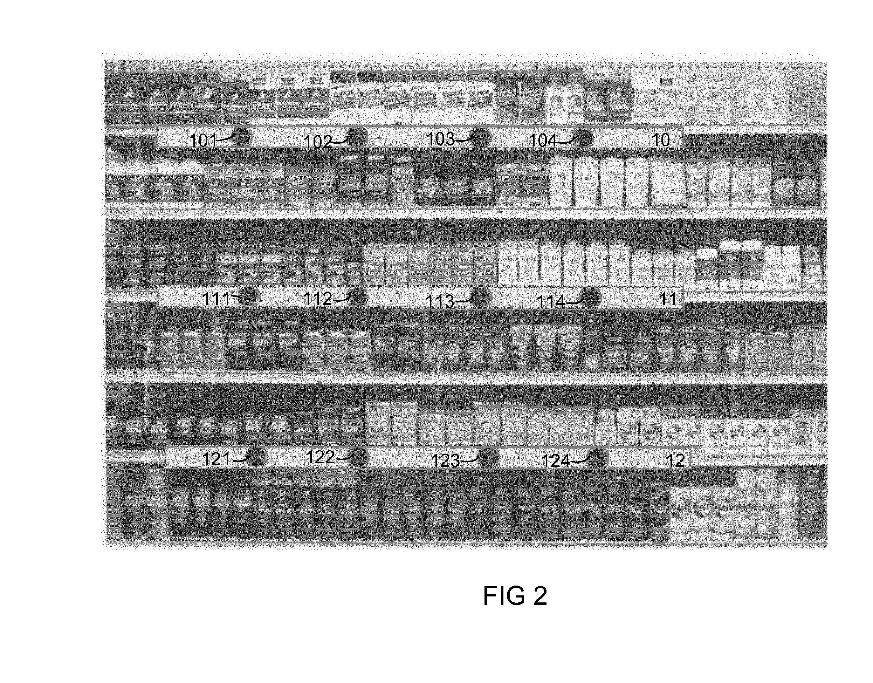

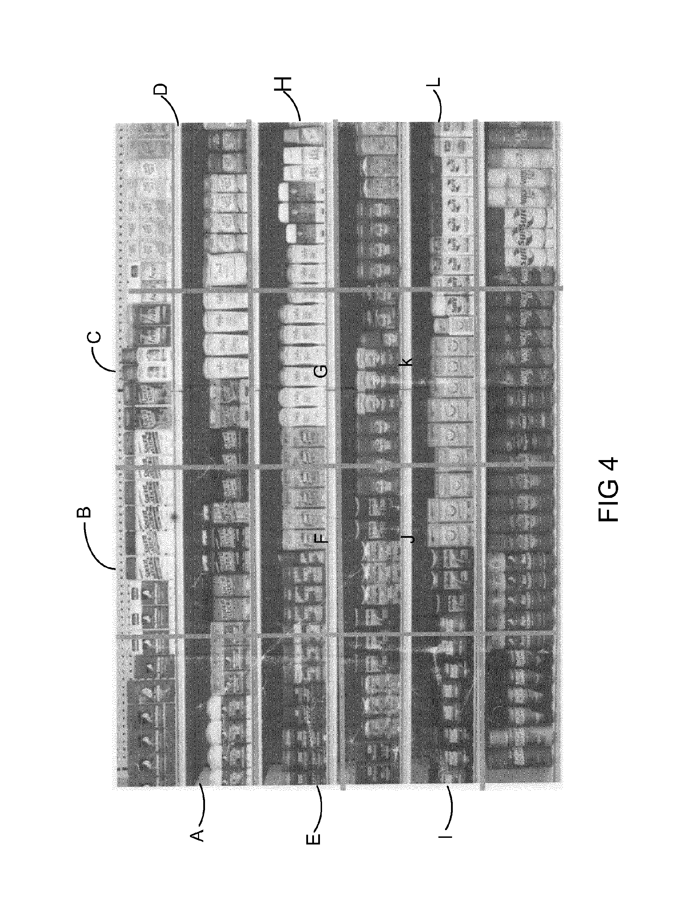

Fig. 2 shows an example scene including the bars 10, 11, 12 mounted on shelves including a plurality of different product packaging. Each of the cameras 101-104, 111-114, 121-124 are adjusted to cover a particular field of view so that they can be used to determine if a shopper is looking at a corresponding area of the example scene. Fig. 4 shows the example scene divided into a distributed array of areas by the bars 10, 11, 12 and the cameras 101-104, 111-114, 121-124 of the eye movement monitor 1. For example, each of the cameras 101-104, 111-114, 121-124 covers a field of view that corresponds to an area of one of the of the boxes dividing the scene shown in Fig. 4.

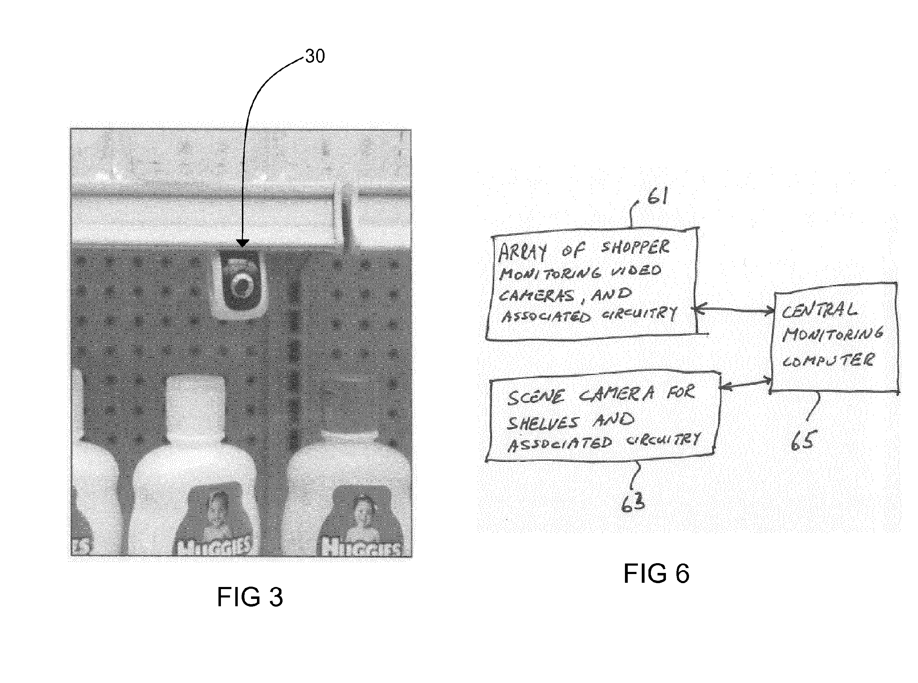

The system further comprises a scene camera 30 (Fig. 3). The scene camera 30 is located across from a position of the bars 11, 12, 13, i.e., across from the scene to be monitored (S2000 on Fig. 5). For example, the scene camera 30 may be located directly across from the bars 11, 12, 13. However, the scene camera may be located anywhere that it can be zoomed in or out and/or angled and adjusted to provide a view of the scene to be monitored, i.e., the areas covered by the bars 11, 12, 13 and their cameras 101-104, 111-114, 121-124. That is, the zoom, angle and/or location of the scene camera 30 are adjusted to cover the scene to be monitored. Fig. 3 shows an example of a scene camera 30 located on a shelf opposite, i.e., across the aisle from, the scene shown in Fig. 2.

The cameras 101-104, 111-114, 121-124 are configured to record a video feed or signal of their field of view (S3000 in Fig. 5). Each individual camera time stamps their respective video feed and sends the time stamped video feed to a central monitoring computer 65 (Fig. 6) The cameras 101-104, 111-114, 121-124 may also include identification information with their respective video feeds to indicate that the feed corresponds to that particular camera. The time-stamped video feed may be sent over a wired connection or a wireless connection (e.g., a WiFi Intranet) to the central monitoring computer. Each camera's feed is filtered through one or more facial recognition programs and processed at the central monitoring computer to determine whether a consumer is looking at the particular area corresponding to the camera. The camera's feeds are also processed to determine if the consumer recognized the package as packaging for a particular product, how often a consumer looked at the particular package and for how long the consumer looked at the particular package.

The scene camera 30 is configured to record a video feed or signal of its field of view, for example, the example scene shown in Fig. 2 including the bars 10, 11, 12 mounted on shelves including a plurality of different product packaging (S3000 in Fig. 5). The scene camera 30 time stamps a video feed of its field of view and sends the time stamped video feed to the central monitoring computer over a wired or wireless connection. Adjustment of the scene camera 30, which may be performed locally or remotely by the central monitoring computer, is used to insure that the video feed from the scene camera matches up correctly with the scene covered by the cameras 101-104, 111-114, 121-124.

As mentioned above, the scene to be monitored is divided into a number of areas corresponding to the number of cameras 101-104, 111-114, 121-124 on the bars 10, 11, 12. For example, Fig. 4 shows an example scene that is divided into 12 areas A to L corresponding to the cameras 101-104, 111-114, 121-124 shown in Fig. 1, i.e., 3 bars having 4 cameras each. For example, the bars 10, 11, 12 and cameras 101-104, 111-114, 121-124 are arranged in a distributed array to create a matrix of columns and rows including the areas corresponding to each of the cameras 101-104, 111-114, 121-124. A number of the bars 10, 11, 12 may be varied to vary the number of rows of areas of the distributed array. A number of cameras 101-104, 111-114, 121-124 on each bar may be varied to vary the number of columns of areas of the distributed array. Accordingly, the size of the areas of the scene to be monitored may be varied.

The central monitoring computer filters the video feed of each of the cameras 101-104, 111-114, 121-124 through the one or more facial recognition programs (S4000 in Fig. 5). The central monitoring computer matches the filtered video feed from the cameras 101-104, 111-114, 121-124 with the signal from the scene camera 30 based on their respective time stamps (S5000 in Fig. 5). For example, the video feeds from the cameras 101-104, 111-114, 121-124 are matched with the video feed from the scene camera 30 to overlap the video feed of the scene from the scene camera 30 with the video feed from the camera of the cameras 101-104, 111-114, 121-124 that the shopper is looking at to show which area of the scene the shopper is viewing at a particular time. For example, the system will produce a view of the scene recorded by the scene camera along with a the grid, as shown in Fig. 4. If the system determines that the shopper is looking at shopper monitoring camera 112, then the grid lines surrounding scene area F will flash.

The results of the facial recognition filtering are processed by the central monitoring computer with the matched video feed from the scene camera 30 to determine whether a consumer or shopper is looking at a particular area of the scene that corresponds to one of the particular cameras and, thus, at particular product packaging (S6000 in Fig. 5). The results are also processed to determine if the consumer or shopper recognized the area as containing packaging for a particular product, how often a consumer looked at a particular area or packaging and for how long the consumer looked at the particular area or packaging.

Fig. 6 shows a box 61 representing the array of shopper-monitoring cameras depicted in Fig. 1. Box 61 also represents the processing circuitry for time stamping the video feed generated by each camera, as well as whatever other signal processing my be required. Box 61 also represents the transmission circuitry to provide the processed video signal to central monitoring comuter 65. Box 63 represents scene camera 30, its processing circuitry and its transmission circuitry. This method and system as disclosed above do not require any cooperation from the subject, or that the subject even be aware of the eye movement recorder arrangement. Therefore, it provides a more realistic simulation of real-world shopping and more accurate monitoring results.

Although example embodiments have been shown and described in this specification and figures, it would be appreciated by those skilled in the art that various readily apparent changes may be made to the illustrated and/or described example embodiments. For example, rather than devoting a full-time video scene camera 30 to the inventive system, a still photograph can be taken of the shelving with a hand-held camera to provide an image with the same field of view. Steps S500 and S6000 could be performed with the image from such photograph. Of course, having a video scene camera 30 available is clearly more convenient in terms of installation and setup, and its ever-present availability enables the system to promptly and efficiently perform its monitoring function despite frequent changes in the product arrangements displayed on the shelves. This and other such changes are intended to fall within the scope of the invention as defined by the following claims.

## Claims

1. A system for monitoring eye movement of a person viewing a scene composed of discrete areas, comprising:
a plurality of video cameras arranged so that a field of view of each of the plurality of video cameras corresponds to a respectively different one of the discrete areas of the scene, each of the plurality of video cameras being adapted to record a person within its respective field of view; and
a processor receiving the video output from each of the plurality of cameras and configured to determine which of said discrete areas of the scene the recorded person is viewing.

2. The system according to claim 1, wherein the discrete areas constitute a matrix of columns and rows, and the plurality of video cameras are arranged respectively in the discrete areas.

3. The system according to claim 2, wherein the scene includes store shelving containing packaging or other items, the system further comprising at least one support bar mounting at least some of the plurality of cameras, wherein the at least one bar is attached to the shelving.

4. The system according to claim 3, wherein the at least one bar comprises a plurality of bars mounting the plurality of cameras, and the plurality of bars are respectively attached to a plurality of shelves in said shelving.

5. The system according to claim 1, wherein the video output from each of the plurality of video cameras is a time-stamped video feed of their respective field of view.

6. The system according to claim 5, further comprising a scene camera arranged so that its field of view includes the scene viewed by the person, and having a time-stamped video output of its field of view.

7. The system according to claim 6, wherein the field of view of each of said plurality of video cameras is adapted to record the person's face as the person is viewing the scene, and wherein the processor is configured to apply facial recognition filtering to the time-stamped video feeds from the plurality of video cameras to recognize which area of the scene the person is viewing at a particular time, to match by time-stamps the recognized area with the time-stamped video feed from the scene camera, and to overlap a display of the video feed of the overall scene with a displayed indication showing which of the areas in the scene the person is looking at.

8. The system according to claim 7, wherein the processor is configured to determine whether the person recognizes that area of the scene the person is viewing at the particular time as containing packaging for a particular product.

9. The system according to claim 7, wherein the processor is configured to determine how often the person views a particular area of the scene.

10. The system according to claim 7, wherein the processor is configured to determine a duration for how much time the person viewed a particular area of the scene.

11. A method for monitoring eye movement of a person viewing a scene composed of discrete areas, comprising:
providing a plurality of video cameras arranged so that a field of view of each of the plurality of video cameras corresponds to a respectively different one of the discrete areas of the scene;
recording with each of the plurality of video cameras a person within its respective field of view; and
processing the video feed output from each of the plurality of cameras to determine which of said discrete areas of the scene the recorded person is viewing.

12. The method for recording eye movement according to claim 11, further comprising:
dividing said scene into a matrix of said discrete areas constituting columns and rows; and
arranging the plurality of cameras to respectively correspond to said matrix of said discrete areas.

13. The method for recording eye movement according to claim 11,
wherein the scene includes store shelving containing packaging or other items, and further comprising providing at least one support bar mounting at least some of the plurality of cameras, and attaching the at least one bar to the shelving.

14. The method for recording eye movement according to claim 13,
wherein the at least one bar comprises a plurality of bars mounting the plurality of cameras, and the plurality of bars are respectively attached to a plurality of shelves in said shelving.

15. The method for recording eye movement according to claim 11, further comprising time stamping the video feed recorded by each of the plurality of cameras of their respective field of view.

16. The method for recording eye movement according to claim 15, further comprising arranging a scene camera so that its field of view includes the scene viewed by the person, and recording with said scene camera a time-stamped video of the scene to be monitored.

17. The method for recording eye movement according to claim 16, further comprising:
arranging the field of view of each of said plurality of video cameras to record the person's face as the person is viewing the scene;
applying facial recognition filtering to the time-stamped video feeds from the plurality of video cameras to recognize which area of the scene the person is viewing at a particular time;
matching the time-stamp of the recognized area with the time-stamp of the video feed from the scene camera; and
overlapping a display of the video feed of the overall scene with a displayed indication showing which of the areas in the scene the person is looking at.

18. The method for recording eye movement according to claim 17, further comprising determining whether the person recognizes that area of the scene the person is viewing at the particular time as containing packaging for a particular product.

19. The method for recording eye movement according to claim 17, further comprising determining how often the person views a particular area of the scene.

20. The method for recording eye movement according to claim 17, further comprising determining a duration for how much time the person viewed a particular area of the scene.
